# EUROPEAN PATENT SPECIFICATION

(11) **EP 2 918 487 B1**
(45) Date of publication and mention of the grant of the patent: **18.03.2020**
(21) Application number: 13852438.4
(22) Date of filing: 07.11.2013
(51) Int. Cl.: B62M 1/36, B62M 3/08, B62M 1/26, B62K 3/00

(54) **BICYCLE WITH DIFFERENTIATED ACTIVATION UNIT**
FAHRRAD MIT DIFFERENZIERTER AKTIVIERUNGSEINHEIT
BICYCLETTE À ENSEMBLE D'ACTIONNEMENT DIFFÉRENCIÉ

(30) Priority: 09.11.2012 BR 1228693
(43) Date of publication of application: 16.09.2015
(73) Proprietor: Aruanã Energia S/A, 74.686-015 Goiânia - GO (BR)
(72) Inventor: BREWER, Brian Ray, CEP: 88036-002 Florianópolis - Santa Catarina (BR); MCKINNON, Robert James, CEP: 88036-002 Florianópolis - Santa Catarina (BR)
(74) Representative: Brann AB
(86) International application number: PCT/BR2013/000473
(87) International publication number: WO 2014/071484

(56) References cited:
- WO-A1-2006/076823
- WO-A1-2011/065637
- WO-A2-2010/050749
- CH-A5- 694 761
- CN-A- 102 717 858
- FR-A- 423 888
- FR-A- 845 922
- FR-A1- 2 876 656
- TW-B- 564 233
- US-A1- 2002 130 484
- US-A1- 2003 127 822
- US-A1- 2008 116 655
- US-B1- 8 220 814
- US-B2- 6 663 127

## Description

This report pertains to an Invention Patent application introducing a bicycle with a distinctive drive assembly that enables cyclists to ride the bicycle in an erect position.

The current state of the art includes conventional bicycles that consist of a normally tubular frame with a front wheel capable of being steered by means of handlebars, as well as a rear wheel equipped with a ratchet mechanism mounted on its hub, which is driven by a chain that, in turn, extends around a sprocket driven by pedals mounted on cranks, and this type of bicycle, according to the most varied types of configurations, has a seat on which a cyclist can sit. Nonetheless, the movement carried out by the user of this bicycle is a cyclical motion and therefore not natural, like walking.

The state of the art also includes attempts to introduce a type of drive for bicycles whereby a cyclist can ride a vehicle of this kind while in an erect position, as in the US document, U.S. Patent Number 8,162,338 of April 24, 2012, where the rear portion of the proposed bicycle has a structure where the sprocket is mounted and connected to the ratchet mechanism by means of a chain.

With this type of bicycle, the sprocket is driven by cranks that, instead of being equipped with conventional pedals, are linked to long rods whose ends include platforms for the cyclist's feet, with one platform for the right foot and another for the left foot, each of which has its own rod connecting it to the crank.

In this type of bicycle, the front end of each platform for a cyclist's feet contains a pulley that moves on a tubular track positioned in a slightly tilted manner, so that the cyclist travels forward in an alternating manner on the platforms by means of elliptical movements that are similar to normal human striding. These movements are translated into an angular oscillating motion of the rods and are subsequently converted into the rotary motion of the sprocket to produce the corresponding movement of rotary motion of the ratchet mechanism connected to the hub of the rear wheel.

This type of bicycle has a series of disadvantages that, for example, include the fact that substantial alteration of a bicycle's structure is necessary in order to accommodate the sprocket/ratchet assembly located above the rear wheel in the rear portion, thus creating an unusually and excessively complex design structure with costs exceeding the normal costs associated with ordinary bicycles.

Another design that deserves to be cited and that represents the state of the art is the design for a vehicle described by U.S. Patent Number 7,803,090 of September 29, 2010. This vehicle is not actually a bicycle because it has three wheels, with two front wheels and one rear wheel.

The vehicle described in document US 7,803,090 is a hybrid tricycle with a drive system generically analogous to the one described in document US8,162,338, since it uses rods connected to mountings for the feet as a means of directly moving the rear wheel, which constitutes the drive unit for the vehicle.

The aforementioned tricycle consists of an elliptical machine that imitates normal human striding, and its steering is even more complex and is based on a design where simplicity is not a priority. It is also a relatively long, wide, and heavy machine, and it therefore constitutes a limited means of transportation.

Additionally, in relation to the types of vehicles belonging to the state of the art and in a more direct manner in terms of this last example of a three-wheeled vehicle, also known as "Street Strider," a shared feature can be observed whereby both of them produce a form of movement of the cyclist's feet that can be regarded or defined as being essentially elliptical.

In general terms, the type of elliptical motion identified in the two vehicles cited as belonging to the state of the art, and that can be defined as elliptical, has been found to be more efficient than the turning motion produced by more conventional bicycles, insofar as an elliptical trajectory more closely approximates the natural motion that characterizes human striding.

Further relevant documents related to this invention are available in the State of Art: Document US2002/130484, considered the closest Prior Art, discloses a tricycle having a tubular frame that includes a front handlebar that, by means of a fork, controls the front wheel, with said tubular frame being equipped with a central moving assembly that includes a sprocket; said sprocket having respective cranks and being connected via a chain, that continues toward the rear portion of the tubular frame, to a ratchet driving the rear wheel; said bicycle having pedal boards with each of the pedal boards being mounted in a pivoting manner by its front end on the ends of the respective cranks, whereby each of the pedal boards is extended in the form of a guide rod, said guide rods being supported by a rear assembly containing sliding mountings, with this rear assembly being formed by a transverse tube that is horizontally incorporated into the frame and accommodates a roller at each of its ends. In short, it is a "step" type bicycle in which the movement that is made is equivalent to climbing stairs and not walking normally, or running, and therefore differs to the solution suggested in this invention.

Document US2003/0127822 describes another "step" type bicycle with distinctive drive assembly and having a tubular fame that includes a front handlebar that, by means of a fork, controls the front wheel, with said tubular frame being equipped with a central moving assembly that includes a sprocket, which has respective cranks and is surrounded by a chain that continues toward the rear portion of the tubular frame, where the rear wheel, driven by a sprocket, is located; this bicycle also has pedal boards with each of the pedal boards being mounted in a pivoting manner by its front end on the ends of the respective cranks, whereby each of the pedal boards is extended in the form of a guide rod. The guide rods are supported by a rear assembly containing sliding mountings, with this assembly being formed by a transverse tube, rear wheel shaft supporting the rear frame that is horizontally incorporated into the frame and accommodates a roller at each of its ends. Unlike with the bicycle of the invention, in this the pedals always remain in a horizontal position throughout their travel during pedaling.

The bicycle to which this patent application pertains was developed in consideration of the previously described state of the art. This bicycle's configuration is that of a conventional bicycle, while the innovation consists of replacing the pedals with wide pedal boards to accommodate the cyclist's entire foot, and the pedal boards are mounted on respective cranks for driving a sprocket/ratchet system in a conventional manner. The system's ratchet mechanism is likewise mounted on the hub of the bicycle's rear wheel in a conventional manner.

Each pedal board on the bicycle herein described has a guide rod that meets with a sliding mount on the rear portion of the bicycle. This mount can be based on adoption of a rotation for each of the rods, for example.

In a different manner from that which is observed among the cited vehicles representing the state of the art, the pedal boards incorporated in the bicycle herein described provide circular motion that is naturally combined with angular motion controlled by the guide rods.

With this bicycle, the cyclist can ride in an erect position, while using movements that are wholly natural.

In objective terms, the bicycle herein described favorably combines elementary aspects of conventional bicycles with a wholly innovative distinctive drive system, and an innovative technical result is obtained from this synergic combination, whereby this vehicle, in spite of its possessing a distinctive drive system offers a mode of operation that is not unusual to cyclists.

Moreover, the bicycle herein described is the result of a design that prioritizes structural simplicity and complete functionality, whereby a vehicle that is capable of being produced on a large scale at an extremely competitive cost can be obtained.

With the bicycle herein described, the type of movement obtained can be defined and regarded as essentially elliptical, as has been observed in relation to the state of the art examples cited, with this type of movement being obtained based on a design that, as stated above, gives priority to structural simplicity and complete functionality. In this instance, the design of the bicycle being proposed results in a vehicle that can be manufactured in a more economical way, by using standard, simpler parts and a more conventional construction that are available throughout the world. The bicycle herein described provides a type of movement that simulates the way a human moves, in addition to being configured as a means of increasing speed on straightaways and also as a means of increasing torque when the cyclist is using the bicycle to conquer steep terrain, such as hills, mountains, etc.

In an innovative manner, the bicycle under discussion has the role of a vehicle with applications for leisure, transportation, and sports that can be accomplished in a more ergometric manner than what has been encountered with regard to normal bicycles that, not infrequently, cause cyclists to experience discomfort that can include: numbness in their hands and feet, pain in the spine when used for longer distances, *inter alia.*

The bicycle to which this patent application pertains shall be fully understood in terms of all of its aspects according to the detailed description that will be given based on the drawings indicated below, where:

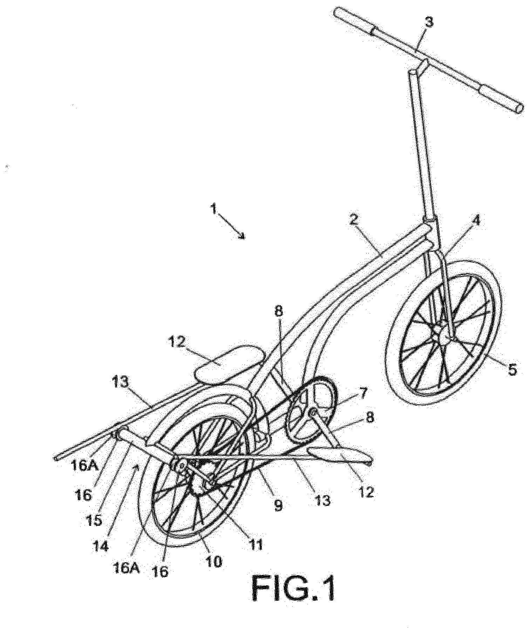

Figure 1 presents a perspective view of one model of the bicycle being described herein.

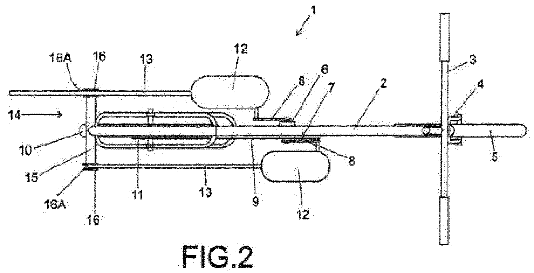

Figure 2 presents an overhead view of the bicycle model appearing in Figure 1;
Figure 3 presents a detailed view of the rear portion of the bicycle described herein where mountings for the guide rods are.
Figure 3A presents an enlarged detailed schematic view taken from Figure 3. It depicts one variation of the assembly formed by the mountings and the guide rods.
Figure 3B presents a second variation of the assembly formed by the mountings and guide rods, which are also schematically depicted according to Figure 3.
Figure 4 presents a third variation of the assembly formed by the mountings and the guide rods of the bicycle described herein.
Figure 5 presents a fourth variation of the assembly formed by the mountings and the guide rods of the respective bicycle;
Figure 6 presents a view of a fifth variation of the assembly formed by the mountings and the guide rods of the bicycle described herein; and Figure 7 presents a sixth and final variation of the assembly formed by the mountings and the guide rods of the respective bicycle, where a pivoting retaining ring is provided for each rod on each of the rollers. This ring's function is to prevent the rods from coming out of their respective rollers.

In accordance with that illustrated in the above-described drawings, the bicycle proposed herein and that is generally indicated by numerical reference 1, has a tubular frame, 2, that, in a conventional manner, includes front handlebars, 3, for steering a front wheel, 5, by means of a fork, 4. The tubular frame, 2, is outfitted with a central moving assembly, 6, that includes a sprocket, 7.

The sprocket, 7, has respective cranks, 8, and it is surrounded by a chain, 9, extending toward the rear portion of the tubular frame, 2, the location where the rear wheel, 10, is mounted and driven by a ratchet mechanism, 11, which is also conventional.

The bicycle, 1, herein proposed differs from conventional bicycles on account of the fact that the front end of each of the pedal boards, 12, pivots on the ends of the respective cranks, 8, with each pedal board, 12, extending in the opposite direction with a guide rod, 13.

The guide rods, 13, are supported on the rear sliding support assembly, 14, with this assembly being made up of a transverse tube, 15, horizontally integral with the frame, 2, and where each of its ends accommodates a roller, 16, the groove, 16A, of which is suitably sized for accommodating the cross-section of the guide rod, 13.

The bicycle, 1, described herein is propelled by the action of the sprocket, 7, via the cranks, 8, and this assembly rotates around the central moving axle, 6, and, the cranks, 8, the pedal boards, 12, that rotate around the same axle in the central moving assembly, 6, pivot while they execute angular movement determined by the positioning of the guide rods, 13, on the respective sliding mountings, 14.

As can be easily understood, the movement that propels the bicycle, 1, is much more natural, because the pedal boards, 12, rotate around the sprocket, 7, in a manner analogous to that which is observed in relation to pedals on conventional bicycles.

The drive system described herein is innovative in the sense that it allows the cyclist to operate the bicycle in an erect position without requiring elimination of the conventional power transmission system that begins with the cranks, 8, passes through the sprocket, 7, and the chain, 9, and ends at the ratchet mechanism, 11, and the rear wheel, 10.

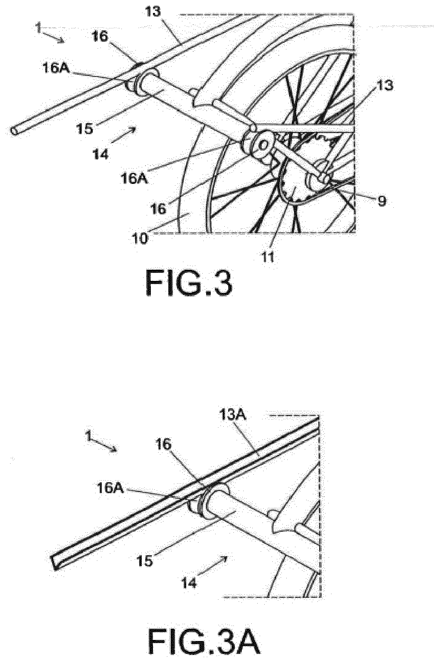

The initial variation of the bicycle, 1 described herein appears in Figure 3A. This variation differs from the principal model insofar as the sliding support assembly, in general, where there are rollers, 16, with a groove, 16A, configured so to accommodate a guide rod, 13A with a "V"-shaped profile.
This bicycle also has a second variation derived from the first, where the same type of roller, 16, with a groove, 16A configured to accommodate a guide rod, 13, with a "V"-shaped profile accommodates a guide rod with a triangular tubular profile indicated by the reference 13B.

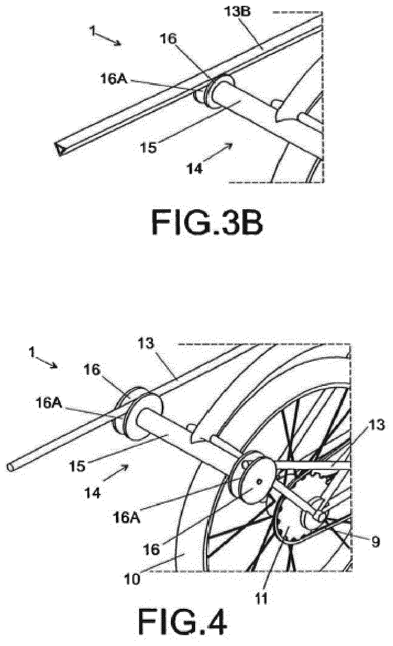

The bicycle, 1, described herein also has a third variation that is depicted in Figure 4 and is different from the principal model insofar as the sliding support assembly, 14, is concerned. In this assembly, rollers, 16, with grooves, 16A, that are proportionally deeper, are adopted, and this fact increases the actual retention condition of the guide rods, 13, to its condition of being supported on such rollers.

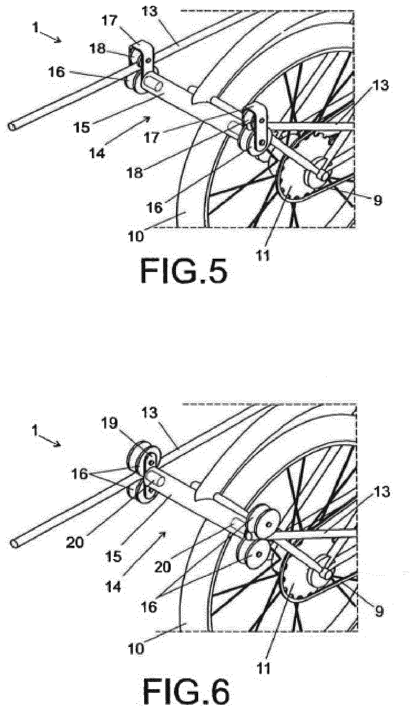

The bicycle, 1, also has a fourth variation that appears in Figure 5, where the sliding support assembly, 14, includes a structure in the shape of an inverted "U", 17, around the roller. In its upper portion, this "U"-shaped structure has an auxiliary roller, 18, that may have a smaller diameter measurement than the diameter measurement chosen for the other rollers, 16.

The "U"-shaped structure, 17, is mounted in such a manner as to rotate around the same shaft as its respective roller, 16, thereby allowing the auxiliary roller, 18, to be capable of assuming a position of opposition to the movement of the guide rod, 13, when moving away from the roller, 16, at any angle that may be assumed by the guide rod, 13, during its movement.

Figure 6 depicts a fifth and final variation of the bicycle, 1, proposed herein. This variation, that, in the manner that has been seen with the last two cited variations, differs from the principal model, insofar as its sliding support assembly, 14, which involves the use of a pair of rollers, 16, that are mounted on a pivoting structure, 19 (of which only one is visible), that rotates around the respective shafts, 20, with the rollers, 16, of the fifth variation of the bicycle, 1, herein described are precisely the same as the rollers, 16, adopted in the principal model.

In any of the models of the bicycle, 1, presented here, each of the guide rods, 13, is positioned so as to maintain permanent contact with the sliding mountings, 14, during the entire cycle of movement of the pedal boards, 12, that also occurs with the variations identified as 13A and 13B of the rod, 13, respectively depicted in Figures 3A and 3B.

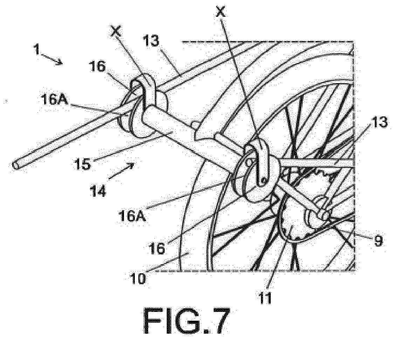

Following the same principle above, the sixth and final variation appears in Figure 7 where the assembly formed by the sliding mountings, 14, and the guide rods, 13, includes a retaining ring indicated by the reference X, which pivots on each of the respective rollers, and it also has the function of preventing the guide rods from coming out of their respective grooves.

The bicycle, 1, being described herein presents a substantially simpler and more functional configuration when compared to the examples cited representing the state of the art.

## Claims

1. Bicycle (1) with distinctive drive assembly having a tubular frame (2) that includes a front handlebar (3) that, by means of a fork (4), controls the front wheel (5), with said tubular frame (2) being equipped with a central moving assembly (6) that includes a sprocket (7) having respective cranks (8), and being surrounded by a chain (9) that continues toward the rear portion of the tubular frame (2), where a rear wheel (10), driven by a ratchet (11) is located, said bicycle further comprising pedal boards (12) wherein each of the pedal boards (12) are mounted in a pivoting manner by their respective front fends on the ends of the respective cranks (8), whereby each of the pedal boards (12) 2. are extended in the form of a guide rod (13); said guide rods (13) being supported by a rear assembly (14) containing sliding mountings, and being formed by transverse tube (15) that is horizontally incorporated into the frame (2) and accommodates a roller (2) at each of its ends, said roller (16) having a groove (16A) the size of which is intended to accommodate the cross-section of the guide rod (13), **characterized in that** said transverse tube (15) being incorporated into the frame above and behind the rear wheel (10).

2. Bicycle with distinctive drive assembly according to claim 1, **characterized by** the guide rod (13) having a tubular profile with a triangular cross-section (13B).

3. Bicycle with distinctive drive assembly according to claim 1, **characterized by** the sliding support assembly (14) including rollers (16) with proportionally deeper grooves (16A).

4. Bicycle with distinctive drive assembly according to claim 1, **characterized by** the sliding support assembly (14) including a "U"-shaped structure (17) around each of the rollers (16), with the upper portion of the "U"-shaped structure containing an auxiliary roller (18) and by said "U"-shaped structure (17) being mounted in such a manner as to rotate around the same shaft as the respective roller (16).

5. Bicycle with distinctive drive assembly according to claim 1, **characterized by** the sliding support assembly (14) including a pair of rollers (16) that are mounted in a pivoting structure (19) that rotates around the respective shafts (20).

6. Bicycle with distinctive drive assembly according to claim 1, **characterized by** the the sliding support assembly (14) and the guide rods (13) having a retaining ring (X), that pivots on each of the respective rollers.

## Patentansprüche

1. Fahrrad (1) mit charakteristischer Antriebsbaugruppe, die einen rohrförmigen Rahmen (2) aufweist, der eine vordere Lenkstange (3) beinhaltet, die mittels einer Gabel (4) das Vorderrad (5) steuert, wobei der rohrförmige Rahmen (2) mit einer mittigen Bewegungsbaugruppe (6) ausgestattet ist, die ein Kettenrad (7) beinhaltet, das jeweilige Kurbeln (8) aufweist und von einer Kette (9) umgeben ist, die sich in Richtung des hinteren Abschnittes des rohrförmigen Rahmens (2) fortsetzt, wo sich ein Hinterrad (10) befindet, das durch ein Schaltrad (11) angetrieben wird, wobei das Fahrrad ferner Pedale (12) umfasst, wobei jedes der Pedale (12) auf schwenkende Weise durch ihre jeweiligen vorderen Enden an den Enden der jeweiligen Kurbeln (8) montiert ist, wobei jedes der Pedale (12) in der Form einer Führungsstange (13) erweitert ist; wobei die Führungsstangen (13) durch eine Rückbaugruppe (14) gestützt werden, die Schiebehalterungen enthält, und durch ein Querrohr (15) gebildet sind, das horizontal in den Rahmen (2) integriert ist und eine Rolle (2) an jedem seiner Enden aufnimmt, wobei die Rolle (16) eine Nut (16A) aufweist, deren Größe dazu gedacht ist, den Querschnitt der Führungsstange (13) aufzunehmen, **dadurch gekennzeichnet, dass** das Querrohr (15) in den Rahmen über und hinter dem Hinterrad (10) integriert ist.

2. Fahrrad mit charakteristischer Antriebsbaugruppe nach Anspruch 1, **dadurch gekennzeichnet, dass** die Führungsstange (13) ein rohrförmiges Profil mit einem dreieckigen Querschnitt (13B) aufweist.

3. Fahrrad mit charakteristischer Antriebsbaugruppe nach Anspruch 1, **dadurch gekennzeichnet, dass** die Schiebestützbaugruppe (14) Rollen (16) mit proportional tieferen Nuten (16A) beinhaltet.

4. Fahrrad mit charakteristischer Antriebsbaugruppe nach Anspruch 1, **dadurch gekennzeichnet, dass** die Schiebestützbaugruppe (14) eine U-förmige Struktur (17) um jede der Rollen (16) beinhaltet, wobei der obere Abschnitt der U-förmigen Struktur eine Hilfsrolle (18) enthält und die U-förmige Struktur (17) derart montiert ist, dass sie sich um dieselbe Welle wie die jeweilige Rolle (16) dreht.

5. Fahrrad mit charakteristischer Antriebsbaugruppe nach Anspruch 1, **dadurch gekennzeichnet, dass** die Schiebestützbaugruppe (14) ein Paar Rollen (16) beinhaltet, die in einer schwenkenden Struktur (19) montiert sind, die sich um die jeweiligen Wellen (20) dreht.

6. Fahrrad mit charakteristischer Antriebsbaugruppe nach Anspruch 1, **dadurch gekennzeichnet, dass** die Schiebestützbaugruppe (14) und die Führungsstangen (13) einen Haltering (X) aufweisen, der sich auf jeder der jeweiligen Rollen dreht.

## Revendications

1. Bicyclette (1) à ensemble d'actionnement différencié ayant un cadre tubulaire (2) qui comprend un guidon avant (3) qui, au moyen d'une fourche (4), commande la roue avant (5), ledit cadre tubulaire (2) étant équipé d'un ensemble mobile central (6) qui comprend un plateau (7) ayant des manivelles (8) respectives, et étant entouré par une chaîne (9) qui continue vers la partie arrière du cadre tubulaire (2), où est située une roue arrière (10) actionnée par un rochet (11),
ladite bicyclette comprenant en outre des pédales (12), dans laquelle chacune des pédales (12) est montée de manière pivotante au niveau de son extrémité avant respective sur l'extrémité de la manivelle (8) respective, moyennant quoi chacune des pédales (12) est prolongée sous la forme d'une tige de guidage (13) ; lesdites tiges de guidage (13) reposant sur un ensemble arrière (14) contenant des supports coulissants, et étant formé par un tube transversal (15) qui est intégré horizontalement dans le cadre (2) et reçoit un roulement (2) à chacune de ses extrémités, ledit roulement (16) ayant une rainure (16A) dont la taille a pour but de recevoir la section transversale de la tige de guidage (13),
**caractérisée en ce que** ledit tube transversal (15) est intégré dans le cadre au-dessus de et derrière la roue arrière (10).

2. Bicyclette à ensemble d'actionnement différencié selon la revendication 1, **caractérisée par** la tige de guidage (13) ayant un profil tubulaire avec une section transversale triangulaire (13B) .

3. Bicyclette à ensemble d'actionnement différencié selon la revendication 1, **caractérisée par** l'ensemble de supports coulissants (14) comprenant des roulements (16) avec des rainures proportionnellement plus profondes (16A).

4. Bicyclette à ensemble d'actionnement différencié selon la revendication 1, **caractérisée par** l'ensemble de supports coulissants (14) comprenant une structure en forme de U (17) autour de chacun des roulements (16), avec la partie supérieure de la structure en forme de U contenant un roulement auxiliaire (18) et par ladite structure en forme de U (17) étant montée de manière à tourner autour du même arbre que le roulement respectif (16) .

5. Bicyclette à ensemble d'actionnement différencié selon la revendication 1, **caractérisée par** l'ensemble de supports coulissants (14) comprenant une paire de roulements (16) qui sont montés dans une structure pivotante (19) qui tourne autour des arbres (20) respectifs.

6. Bicyclette à ensemble d'actionnement différencié selon la revendication 1, **caractérisée par** l'ensemble de supports coulissants (14) et les tiges de guidage (13) ayant un anneau de retenue (X), qui pivote sur chacun des roulements respectifs.
